# EUROPÄISCHE PATENTSCHRIFT

(11) **EP 2 406 517 B1**
(45) Veröffentlichungstag und Bekanntmachung des Hinweises auf die Patenterteilung: **17.10.2012**
(21) Anmeldenummer: 09781094.9
(22) Anmeldetag: 27.07.2009
(51) Int. Cl.: F16D 66/00

(54) **HALTEBOLZEN**
RETAINING BOLT
BOULON DE FIXATION

(30) Priorität: 23.09.2008 DE 102008042298; 15.07.2009 DE 102009027737
(43) Veröffentlichungstag der Anmeldung: 18.01.2012
(73) Patentinhaber: Robert Bosch GmbH, 70442 Stuttgart (DE)
(72) Erfinder: VOLLERT, Herbert, 71665 Vaihingen/Enz (DE); DUKART, Anton, 70839 Gerlingen (DE); FOITZIK, Bertram, 74360 Ilsfeld (DE); NAGEL, Willi, 71686 Remseck/Hochdorf (DE); GOETZELMANN, Bernd, 71277 Rutesheim (DE); TILSCH, Joern, 70499 Stuttgart (DE)
(86) Internationale Anmeldenummer: PCT/EP2009/059630
(87) Internationale Veröffentlichungsnummer: WO 2010/034541

(56) Entgegenhaltungen:
- EP-A- 0 849 576
- WO-A-03/048699
- DE-A1- 3 515 126
- DE-A1-102004 059 081
- DE-A1-102006 026 223
- DE-B3-102006 029 978

## Beschreibung

### Stand der Technik

Die Erfindung betrifft einen Haltebolzen zur Befestigung eines Bauteils an einem anderen Bauteil mit den Merkmalen des Oberbegriffs des Anspruchs 1. Insbesondere ist der Haltebolzen zur Befestigung einer Bremse an einem Träger vorgesehen, wobei der Träger beispielsweise ein Radträger eines Kraftwagens, an dem eine Radnabe drehbar gelagert ist, oder ein Drehgestell eines Schienenfahrzeugs sein kann.

Die Europäische Patentanmeldung EP 0 849 576 A1 offenbart einen kapazitiven Kraftsensor, der als Plattenkondensator ausgebildet und in einem niedrigen, zylindrischen, schachtelförmigen Gehäuse untergebracht ist. Der Kraftsensor wird zur Messung einer Spannkraft einer elektromechanischen Scheibenbremse verwendet. Er ist koaxial zu einer Spindel eines elektromechanischen Aktuators zwischen der Spindel und einem Belagträger eines Reibbremsbelags der Scheibenbremse angeordnet, wobei er sich kreisringförmig nahe seinem Außenumfang an der Belagträgerplatte abstützt und im Zentrum hohl liegt. Die Spindel des Aktuators drückt in einer Mitte gegen den Kraftsensor, so dass er sich durch die Wirkung der Spannkraft zweidimensional wölbt. Die Verformung des Gehäuses ist durch Änderung der Kapazität des Plattenkondensators, dessen Kondensatorplatte sich durch die Verformung im Gehäuse bewegt, messbar.

Die internationale Patentanmeldung WO 92/00464 offenbart, als nächstliegender Stand der Technik, eine Scheibenbremse, deren Bremssattel schwimmend, d.h. quer zu einer Bremsscheibe verschiebbar in einem Bremsenhalter gelagert ist. Die schwimmende Lagerung ist mit Schraubbolzen bewerkstelligt, die in den Bremsenhalter geschraubt sind und die einen gewindelosen Abschnitt aufweisen, der aus dem Bremsenhalter vorsteht und dessen vorstehendes Ende kugelförmig gerundet ist. Die Schraubbolzen sind in Richtung eine Sekante beiderseits einer Bremsscheibe angeordnet. Das gerundete Ende greift in Rinnen ein, die quer zur Bremsscheibe an beiden Enden des Bremssattels ausgebildet sind. Die Schraubbolzen sind Abschnittsweise rohrförmig und weisen eine auf Druck beanspruchte Hülse auf, auf deren Außenseite Dehnmessstreifen angeordnet sind. Der Bremssattel stützt sich beim Bremsen an zwei der Gewindebolzen ab, die dadurch elastisch verformt, nämlich in ihrer Achsrichtung gestaucht werden. Die Verformung ist mit den Dehnmessstreifen messbar, aus der Verformung ist die Abstützkraft, mit der sich der Bremssattel am Bremsenhalter abstützt, messbar, die Abstützkraft ist gleich groß wie die Bremskraft, die auf diese Weise messbar ist.

Haltebolzen im Sinne der Erfindung meint ein längliches Element mit vorzugsweise rundem Querschnitt. Der Haltebolzen ist vorzugsweise länger als sein Durch- oder Quermesser, was allerdings nicht zwingend ist. Der Haltebolzen kann einen über seine Länge konstanten Querschnitt aufweisen, beispielsweise zylindrisch sein, oder der Querschnitt ändert sich, der Haltebolzen kann beispielsweise konisch sein. Von einer Kreisform abweichende, beispielsweise ovale oder elliptische Querschnitte sind möglich, ebenso nicht-runde Querschnitte wie beispielsweise Mehrkant- oder Vielzahnprofile, wobei letztere an sich den kreisförmigen Querschnitten zugeordnet sind. Der Haltebolzen kann gewindelos sein oder ein Gewinde über seine gesamte oder einen Teil seiner Länge aufweisen. Auch kann der Haltebolzen einen Kopf oder einen oder mehrere Flansche aufweisen.

Des Weiteren betrifft die Erfindung eine Anordnung zur Befestigung einer Bremse mit einem solchen Haltebolzen.

### Offenbarung der Erfindung

Der erfindungsgemäße Haltebolzen mit den Merkmalen des Anspruchs 1 weist einen Hohlraum auf, der sich über einen Teil oder die gesamte Länge des Haltebolzens erstreckt. Beispielsweise ist der Haltebolzen im Bereich des Hohlraums rohrförmig. Im Hohlraum ist ein Halter angeordnet, der an einer oder mehreren Befestigungsstellen mit dem Halter verbunden ist. Beispielsweise ist der Halter stabförmig, also länglich. Der Halter kann beispielsweise an einem Ende befestigt und sein anderes Ende frei sein. Auch eine Befestigung an beiden Enden der Halters ist möglich. Der Halter ist so im Haltebolzen angeordnet und befestigt, dass er sich mit Abstand von der Befestigungsstelle oder zwischen den Befestigungsstellen in Bezug auf den Haltebolzen bewegt, wenn der Haltebolzen durch eine mechanische Belastung (elastisch) verformt wird. Insbesondere bei einer Biegung des Haltebolzens verändert der Halter seine Lage im Hohlraum des Haltebolzens. Der Haltebolzen weist eine Einrichtung zur Messung der Lage oder Lageänderung bzw. Bewegung des Halters in Bezug auf den Haltebolzen bei einer Verformung des Haltebolzens auf. Aus der Messung der Bewegung des Halters in Bezug auf den Haltebolzen lässt sich auf die Belastung des Haltebolzens schließen. Eine freie Länge des Halters ist einstellbar und dadurch an die Belastungen des Haltebolzens anpassbar, es lässt sich eine Messempfindlichkeit an die Belastung des Haltebolzens anpassen.

Bei Verwendung des Haltebolzens zur Befestigung einer Bremse lässt sich auf die Kraft, mit der die Bremse beim Bremsen gehalten werden muss, und damit auf die Bremskraft, schließen. Das ist der eigentliche Zweck der Erfindung. Allerdings ist die Erfindung nicht auf diese Verwendung beschränkt, mit dem erfindungsgemäßen Haltebolzen können allgemein auf Bauteile einwirkende Kräfte ermittelt werden, die mit einem oder mehreren Haltebolzen befestigt sind, wobei außer den erfindungsgemäßen Haltebolzen zusätzlich andere Befestigungselemente vorhanden sein können. Ein Vorteil der Erfindung ist die geschützte Anordnung der Messeinrichtung im Hohlraum des Halters.

Die Unteransprüche haben vorteilhafte Ausgestaltungen und Weiterbildungen der im Anspruch 1 angegebenen Erfindung zum Gegenstand.

Anspruch 5 sieht die Erzeugung und Messung eines elektrischen und/oder magnetischen Feldes zur Messung der Bewegung des Halters in Bezug auf den Haltebolzen bei Verformung des Haltebolzens vor. Beispielsweise trägt der Halter einen Permanentmagneten, dessen magnetisches Feld mit einem Magnetsensor, der im Hohlraum des Haltebolzens angeordnet ist, gemessen wird. Auch ist denkbar, die Änderung eines elektrischen, magnetischen oder elektromagnetischen, konstanten oder wechselnden Feldes im Hohlraum des Haltebolzens durch die Bewegung des Halters im Hohlraum bei einer Verformung des Haltebolzens zu messen, also sozusagen eine "Verstimmung" des Feldes.

### Kurze Beschreibung der Zeichnung

Die Erfindung wird nachfolgend anhand eines in der Zeichnung dargestellten Ausführungsbeispiels näher erläutert. Es zeigen:
- Figur 1: eine vereinfachte Schemadarstellung einer Eisenbahnbremse, die mit einem erfindungsgemäßen Haltebolzen befestigt ist; und
- Figur 2: den Haltebolzen aus Figur 1 elastisch verformt durch eine Belastung beim Bremsen.

### Beschreibung der Ausführungsform

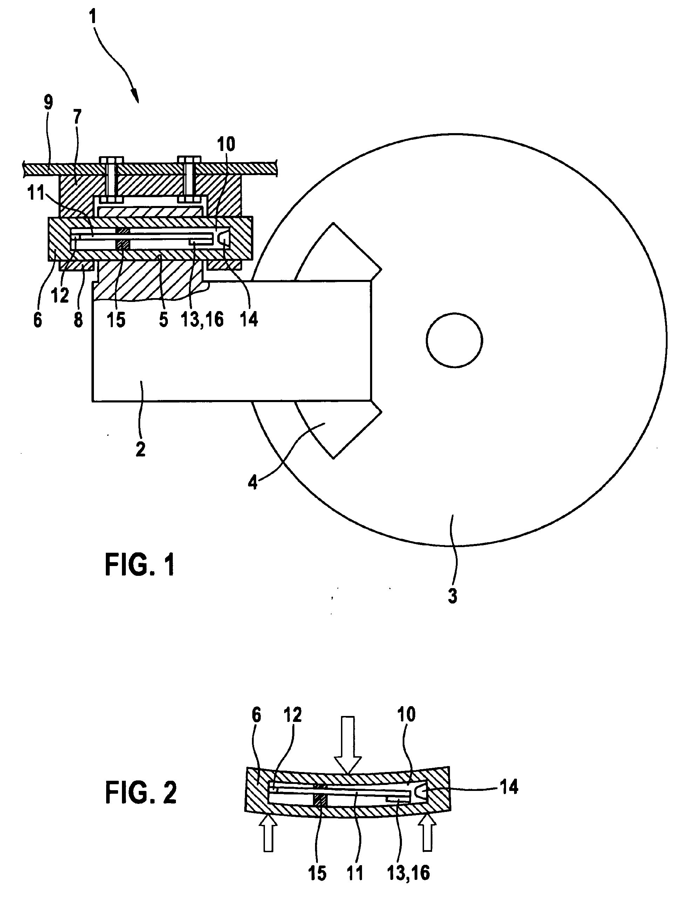

Figur 1 zeigt eine Eisenbahn-Scheibenbremse 1 mit einem Bremssattel 2, in dem beiderseits einer Bremsscheibe 3 Reibbremsbeläge 4 einliegen. Zu einer Bremsbetätigung ist einer der beiden Reibbremsbeläge 4 hydraulisch mit einem in der Zeichnung nicht sichtbaren Bremskolben gegen die Bremsscheibe 3 drückbar. Der Bremskolben ist quer zur Bremsscheibe 3 in einer Zylinderbohrung im Bremssattel 2 verschiebbar. Der Bremssattel 2 ist schwimmend gelagert, d.h. er ist quer zur Bremsscheibe 3 beweglich, so dass durch Andrücken des einen Reibbremsbelags 4 gegen die Bremsscheibe 3 der Bremssattel 2 quer zur Bremsscheibe 3 bewegt wird und den anderen Reibbremsbelag gegen die andere Seite der Bremsscheibe 3 drückt. Die Bremsscheibe 3 wird dadurch gebremst.

Der Bremssattel 2 weist ein zylindrisches Lagerloch 5 auf, durch das ein erfindungsgemäßer Haltebolzen 6 gesteckt ist, auf dem der Bremssattel 2 schwenkbar gelagert ist. Das Lagerloch 5 ist verhältnismäßig lang, ungefähr doppelt so lang wie sein Durchmesser, um den Bremssattel 2 gegen Kippen um eine gedachte Achse radial zum Haltebolzen 6 abzustützen. Der Haltebolzen 6 ist in einer Bremsscheibenebene angeordnet. Durch die Schwenkbarkeit um den Haltebolzen 6 ist der Bremssattel 2 quer zur Bremsscheibe 3 beweglich, d.h. schwimmend gelagert.

Der Haltebolzen 6 ist einem Bremsenträger 7 befestigt, der ein C-förmiges Profil aufweist und dessen beide Schenkel 8 Durchgangslöcher aufweisen, in denen der Haltebolzen 6 mit einer Presspassung aufgenommen ist. Der Bremsenträger 7 ist an einem Drehgestell 9 eines im Übrigen nicht dargestellten Schienenfahrzeugs befestigt, beispielsweise angeschraubt.

Der Haltebolzen 6 ist rohrförmig, er weist einen Hohlraum 10 auf und ist an beiden Enden geschlossen. Im Hohlraum 10 ist ein stab- oder streifenförmiger Halter 11 in Längsrichtung des Haltebolzens 6 verlaufend angeordnet. Ein Ende des Halters 11 ist an einem Ende des Hohlraums 10 im Haltebolzen 6 befestigt, dieses Ende bildet eine Befestigungsstelle 12 des Halters 11. Das andere Ende des Halters 11 ist frei, es trägt einen Permanentmagneten 13. An einem dem freien Ende des Halters 11 nahen Ende des Hohlraums 10 ist ein Magnetsensor 14 im Haltebolzen 6 angeordnet, mit dem ein Magnetfeld des Permanentmagneten 13 messbar ist. Im Hohlraum 10 ist eine Stütze 15 angeordnet, die beispielsweise aus Kunststoff besteht. Ein Umfang der Stütze 15 entspricht einem Querschnitt des Hohlraums 10 des Haltebolzens 6. Die Stütze 15 weist ein Durchgangsloch auf, das kongruent zur einem Querschnitt des Halters 11 ist und vom Halter 11 durchgriffen wird. Die Stütze 15 ist in Längsrichtung des Haltebolzens 6 verschiebbar und stützt den Halter 11 zwischen der Befestigungsstelle 12 und dem freien Ende ab. Durch die Verschiebbarkeit der Stütze 15 ist eine freie Länge des Halters 11 einstellbar und dadurch an die Belastungen des Haltebolzens 6 anpassbar. Das freie Ende des Halters 11, das den Permanentmagneten 13 trägt, bildet eine Messstelle 16.

Bei einer Bremsbetätigung wird der Haltebolzen 6 in seinem mittleren Bereich vom Bremssattel 2 quer zu seiner Längsrichtung belastet und von den Schenkeln 8 des Bremsenträgers 7 gegen die Belastung abgestützt. Dadurch wird der Haltebolzen 6 elastisch gebogen, wie es in Figur 2 übertrieben stark dargestellt ist. Der Halter 11 wird im Hohlraum 10 des Haltebolzen 6 zwischen der Stütze 15 und seinem freien Ende nicht belastet, verformt sich also in diesem Bereich nicht. Dadurch bewegt sich das freie Ende des Halters 11, das den Permanentmagneten 13 trägt und die Messstelle 16 bildet, im Hohlraum 10 quer zum Haltebolzen 6. Ein Magnetfeld des Permanentmagneten 16 ändert sich, zumindest ändert es sich seine Lage im Hohlraum 10 des Haltebolzens 6. Mit dem Magnetsensor 14 ist die Änderung des Magnetfeldes und damit die Bewegung des Halters 11 im Haltebolzen 6 aufgrund der Biegung des Haltebolzens 6 bei Belastung messbar. Damit ist letzten Endes die Belastung des Haltebolzens 6 messbar, die einer Bremskraft entspricht, die die Scheibenbremse 1 auf die Bremsscheibe 3 ausübt. Durch Verschiebung der Stütze 15 lässt sich eine Messempfindlichkeit an die Belastung des Haltebolzens 6 anpassen. Anstelle eines magnetischen Feldes ist auch die Messung eines elektrischen- oder elektromagnetischen Feldes denkbar. Beispielsweise ist eine "Verstimmung" eines elektrischen Wechselfeldes durch die Bewegung des Halters 13 im Hohlraum 10 bei einer Biegung des Haltebolzens 6 messbar.

Der Halter 11 weist zumindest näherungsweise den gleichen Temperaturausdehnungskoeffizienten wie der Haltebolzen 6 auf um eine Änderung der Lage der Permanentmagneten 13 in Bezug auf den Magnetsensor 14 durch Temperaturänderung zu vermeiden.

Die Erfindung betrifft auch die Anordnung der Scheibenbremse 1, d.h. die Befestigung der Scheibenbremse 1 bzw. ihres Bremssattels 2 mit dem erfindungsgemäßen Haltebolzen 6. Es sind auch andere Fahrzeugbremsen, beispielsweise Kraftfahrzeugbremsen, und andere Bremsen, beispielsweise Trommelbremsen, mit dem Haltebolzen 6 befestigbar um eine Bremskraft messen bzw. ermitteln zu können (nicht dargestellt). Der Haltebolzen 6 ermöglicht auch die Messung anderer Belastungen und Kräfte, seine Verwendung ist nicht auf Bremsen beschränkt.

Der Permanentmagnet 16 und der Magnetsensor 14 bilden eine Messeinrichtung 14, 16 zur Messung einer Bewegung des Halters 11 in Bezug auf den Haltebolzen 6 bei einer Biegung des Haltebolzens 6.

## Patentansprüche

1. Haltebolzen zur Befestigung eines Bauteils an einem anderen Bauteil, wobei der Haltebolzen (6) einen Hohlraum (10) aufweist, **dadurch gekennzeichnet, dass** in dem Hohlraum (10) ein Halter (11) angeordnet ist, der an einer Befestigungsstelle (12) mit dem Haltebolzen (6) verbunden ist, dass der Haltebolzen (6) eine Messeinrichtung (14, 16) zur Messung einer Bewegung des Halters (11) in Bezug auf den Haltebolzen (6) an einer Messstelle (16) mit Abstand von der Befestigungsstelle (12) aufweist, und dass eine freie Länge des Halters (11) einstellbar ist.

2. Haltebolzen nach Anspruch 1, **dadurch gekennzeichnet, dass** der Haltebolzen (6) im Bereich des Hohlraums (10) rohrförmig ist.

3. Haltebolzen nach Anspruch 1, **dadurch gekennzeichnet, dass** der Halter (11) stabförmig ist.

4. Haltebolzen nach Anspruch 1, **dadurch gekennzeichnet, dass** sich die Befestigungsstelle (12) an einem Ende des Halters (11) befindet und ein anderes Ende des Halters (11) frei ist.

5. Haltebolzen nach Anspruch 1, **dadurch gekennzeichnet, dass** die Messeinrichtung (14, 16) zur Messung der Bewegung des Halters (11) in Bezug auf den Haltebolzen (6) ein elektrisches und/oder magnetisches Feld erzeugt und misst.

6. Haltebolzen nach Anspruch 1, **dadurch gekennzeichnet, dass** der Halter (11) denselben Temperaturausdehnungskoeffizienten der Haltebolzen (6) aufweist.

7. Anordnung mit einer Bremse (1) und einem Träger (7), **dadurch gekennzeichnet, dass** die Bremse (1) mit einem Haltebolzen (6) nach einem der vorhergehenden Ansprüche am Träger (7) befestigt ist.

8. Anordnung nach Anspruch 7, **dadurch gekennzeichnet, dass** die Bremse (1) eine Scheibenbremse mit einem Bremssattel (2) ist, der mit dem Haltebolzen (6) an dem Träger (7) befestigt ist.

## Claims

1. Retaining bolt for fastening one component to another component, wherein the retaining bolt (6) has a cavity (10), **characterized in that**, in the cavity (10), there is arranged a bracket (11) which is connected to the retaining bolt (6) at a fastening point (12), **in that** the retaining bolt (6) has a measurement device (14, 16) for measuring a movement of the bracket (11) relative to the retaining bolt (6) at a measurement point (16) spaced apart from the fastening point (12), and **in that** a free length of the bracket (11) is adjustable.

2. Retaining bolt according to Claim 1, **characterized in that** the retaining bolt (6) is tubular in the region of the cavity (10).

3. Retaining bolt according to Claim 1, **characterized in that** the bracket (11) is in the form of a bar.

4. Retaining bolt according to Claim 1, **characterized in that** the fastening point (12) is situated at one end of the bracket (11), and another end of the bracket (11) is free.

5. Retaining bolt according to Claim 1, **characterized in that**, to measure the movement of the bracket (11) in relation to the retaining bolt (6), the measurement device (14, 16) generates and measures an electric and/or magnetic field.

6. Retaining bolt according to Claim 1, **characterized in that** the bracket (11) has the same coefficient of thermal expansion as the retaining bolt (6).

7. Arrangement having a brake (1) and a carrier (7), **characterized in that** the brake (1) is fastened to the carrier (7) by means of a retaining bolt (6) according to one of the preceding claims.

8. Arrangement according to Claim 7, **characterized in that** the brake (1) is a disc brake having a brake caliper (2) which is fastened to the carrier (7) by means of the retaining bolt (6).

## Revendications

1. Boulon de fixation pour la fixation d'un composant à un autre composant, le boulon de fixation (6) présentant une cavité (10), **caractérisé en ce qu'**un élément de retenue (11) est disposé dans la cavité (10), lequel élément de retenue est connecté au boulon de fixation (6) au niveau d'un point de fixation (12), **en ce que** le boulon de fixation (6) présente un dispositif de mesure (14, 16) pour mesurer un mouvement de l'élément de retenue (11) par rapport au boulon de fixation (6) au niveau d'un point de mesure (16) à distance du point de fixation (12), et **en ce qu'**une longueur libre de l'élément de retenue (11) peut être ajustée.

2. Boulon de fixation selon la revendication 1, **caractérisé en ce que** le boulon de fixation (6) est de forme tubulaire dans la région de la cavité (10).

3. Boulon de fixation selon la revendication 1, **caractérisé en ce que** l'élément de retenue (11) est en forme de barre.

4. Boulon de fixation selon la revendication 1, **caractérisé en ce que** le point de fixation (12) se trouve à une extrémité de l'élément de retenue (11) et une autre extrémité de l'élément de retenue (11) est libre.

5. Boulon de fixation selon la revendication 1, **caractérisé en ce que** le dispositif de mesure (14, 16) pour la mesure du mouvement de l'élément de retenue (11) par rapport au boulon de fixation (6) produit et mesure un champ électrique et/ou magnétique.

6. Boulon de fixation selon la revendication 1, **caractérisé en ce que** l'élément de retenue (11) présente le même coefficient de dilatation thermique que le boulon de fixation (6).

7. Agencement comprenant un frein (1) et un support (7), **caractérisé en ce que** le frein (1) est fixé avec un boulon de fixation (6) selon l'une quelconque des revendications précédentes sur le support (7).

8. Agencement selon la revendication 7, **caractérisé en ce que** le frein (1) est un frein à disque comprenant un étrier de frein (2), qui est fixé au support (7) avec le boulon de fixation (6).
